# EUROPEAN PATENT SPECIFICATION

(11) **EP 3 038 266 B1**
(45) Date of publication and mention of the grant of the patent: **10.07.2019**
(21) Application number: 15201704.2
(22) Date of filing: 21.12.2015
(51) Int. Cl.: H04B 1/3816, H04B 1/3818, H04M 1/02

(54) **CARD HOLDER**
KARTENHALTER
SUPPORT DE CARTE

(30) Priority: 25.12.2014 CN 201410826477
(43) Date of publication of application: 29.06.2016
(73) Proprietor: Xiaomi Inc., Beijing 100085 (CN)
(72) Inventor: WU, Fenghui, 100085 Haidian District (CN); YAN, Kesheng, 100085 Haidian District (CN)
(74) Representative: Robson, Aidan John

(56) References cited:
- CN-U- 203 406 864
- US-A1- 2008 132 120
- US-A1- 2010 053 913
- US-A1- 2014 185 199

## Description

### TECHNICAL FIELD

The present disclosure relates to the card holding field, and more particularly, relates to a card holder of the type used for electronic cards such as subscriber identity module (SIM) cards.

### BACKGROUND

A terminal with non-removable battery provides a card holder for accommodating such cards as subscriber identity module (SIM) cards, such that a user can replace a card without removing the battery from the terminal.

In the related art, there is provided a card holder, including: a card tray for holding a card, and a body perpendicular to a first side face formed by outward extension from the first side face of the card tray. The body has a length greater than that of the first side face. A second side face opposite to the first side face in the card tray abuts against a first port of a first lever. A second port of the first lever extends outward to form a rotation shaft. The rotation shaft extends outward to form a second lever. The first lever forms an acute angle with the second lever at the card tray side. A port of the second lever extends outward to form a third lever parallel to a third side face of the card tray. The third lever forms a cylinder opening at a projection position of the third lever on the body. The cylinder opening extends along the body.

When a user penetrates through the cylinder opening with an ejection pin and pushes the third lever to move inward, the second lever and the rotation shaft push the first lever to move outward, thereby pushing the card tray outward. CN203406864 U, US2014/185199 A1 and US2008/132120 A1 are examples of prior art card holders.

### SUMMARY

The invention is defined in the appended claims. To solve the problem that replacement of a card is complicated due to use of an ejection pin for replacement the card in a terminal with an non-removable battery, the present disclosure provides a card holder.

According to a first aspect of embodiments of the present disclosure, a card holder is provided, which includes: a card tray, a card lock, and a connector, the card lock including a card fastener and a control button, and the connector including a leaf spring in a card seat; wherein
when the card lock controls, by means of the control button, the card fastener to be away from the card tray, the leaf spring in the card seat recovers from a compressed state to a normal state, and the card tray is ejected outward from a first opening extending along a housing of the card lock; and
when the card tray moves inward from the first opening extending along the housing of the card lock, the leaf spring in the card seat is compressed from the normal state to the compressed state, such that the card fastener and the card tray are in a locked state.

Optionally, the connector includes a first body, an open triangle groove extending along the first body being formed in the first body, a triangle leaf spring in a card seat being formed in the open triangle groove, a part of a first sloping side of the leaf spring in the card seat being bent inward to form a second sloping side, the first sloping side forming an acute angle with the second sloping side, a part of a third sloping side of the leaf spring in the card seat being bent inward to form a fourth sloping side, the third sloping side forming an acute angle with the fourth sloping side;
wherein an upper surface, a lower surface, a left surface, and a right surface of the first body respectively extend toward a direction reverse to the compression direction of the leaf spring in the card seat for a predetermined length, the predetermined length being less than or equal to a length of the card tray.

Optionally, the card holder further includes a first sealing ring, the first sealing ring being positioned at a joint between a second body and a third body of the control button and abutting against the housing of the card lock, the third body being a body being perpendicular to the second body and formed by extension of the second body, the second body mating with a second opening extending along the housing of the card lock.

Optionally, the card lock further includes a first spring abutting against the control button, a first card fastener, and a second card fastener; wherein
when the control button moves inward from a second opening extending along the housing of the card lock, the first card fastener moves toward a first direction away from the card tray, the second card fastener moves toward a second direction away from the card tray, and the first spring is compressed from the normal state to the compressed state; and
when the first spring recovers from the compressed state to the normal state, the first card fastener moves toward a third direction approaching the card tray, and the second card fastener moves toward a fourth direction approaching the card tray.

Optionally, the first card fastener includes a second spring and a first locking rod abutting against the second spring via a first port;
wherein the first locking rod includes a fourth body, a first groove extending along the fourth body being formed in the fourth body, a side face close to the first port in the first groove abutting against a first side face of the control button, a second port opposite to the first port in the fourth body abutting against a second groove of the card tray.

Optionally, the second card fastener includes a third spring and a second locking rod abutting against the third spring via a third port;
wherein the second locking rod includes a fifth body, a third groove extending along the fifth body being formed in the fifth body, a side face close to the third port in the third groove abutting against a fourth groove of the card tray, a fourth port opposite to the third port in the fifth body abutting against a second side face of the control button.

Optionally, the card tray includes a sixth body, the sixth body including at least one card opening extending along the sixth body, a seventh body perpendicular to the sixth body being formed by outward extension of the card opening along a third side face of the sixth body, the seventh body mating with the first opening;
wherein the second groove extending along the sixth body is formed on a fourth side face perpendicular to the third side face, and the fourth groove extending along the sixth body is formed on a fifth side face perpendicular to the third side face.

Optionally, the card holder further includes a second sealing ring, the second sealing ring being positioned at a joint between the sixth body and the seventh body.

The technical solutions provided in the embodiments of the present disclosure may achieve the following beneficial effects:

When the card lock controls the card fastener to be away from the card tray by means of the control button, the leaf spring in the card seat recovers from a compressed state to a normal state, and the card tray is ejected outward from a first opening extending along a housing of the card lock, such that a user may control ejection of the card tray via the control button, with no need of using an ejection pin. This solves the problem that replacement of a card is complicated due to the use of an ejection pin for replacement of the card in a terminal with an non-removable battery, and improves the card replacement efficiency.

It shall be appreciated that the above general description and the detailed description hereinafter are only illustrative but not for limiting the present disclosure.

### BRIEF DESCRIPTION OF THE DRAWINGS

The accompanying drawings herein, which are incorporated into and constitute a part of the specification, illustrate embodiments consistent with the present disclosure, and with the specification, serve to explain the principles of the present disclosure.
Fig. 1 is a block diagram illustrating a card holder according to an exemplary embodiment of the present disclosure;
Fig. 2 is a block diagram illustrating a card holder according to another exemplary embodiment of the present disclosure;
Fig. 3 is a schematic diagram illustrating ejection of a card tray according to an exemplary embodiment of the present disclosure;
Fig. 4 is a schematic diagram illustrating retraction of a card tray according to an exemplary embodiment of the present disclosure;
Fig. 5 is a schematic structural diagram illustrating a connector according to an exemplary embodiment of the present disclosure;
Fig. 6 is a schematic structural diagram illustrating a card holder according to an exemplary embodiment of the present disclosure;
Fig. 7 is a schematic structural diagram illustrating a card fastener according to an exemplary embodiment of the present disclosure;
Fig. 8 is a first schematic partial structural diagram illustrating a card fastener according to an exemplary embodiment of the present disclosure;
Fig. 9 is a second schematic partial structural diagram illustrating a card fastener according to an exemplary embodiment of the present disclosure;
Fig. 10 is a first schematic diagram illustrating a first sealing ring according to an exemplary embodiment of the present disclosure;
Fig. 11 is a second schematic diagram illustrating the first sealing ring according to an exemplary embodiment of the present disclosure;
Fig. 12 is a first schematic diagram illustrating a second sealing ring according to an exemplary embodiment of the present disclosure; and
Fig. 13 is a second schematic diagram illustrating the second sealing ring according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

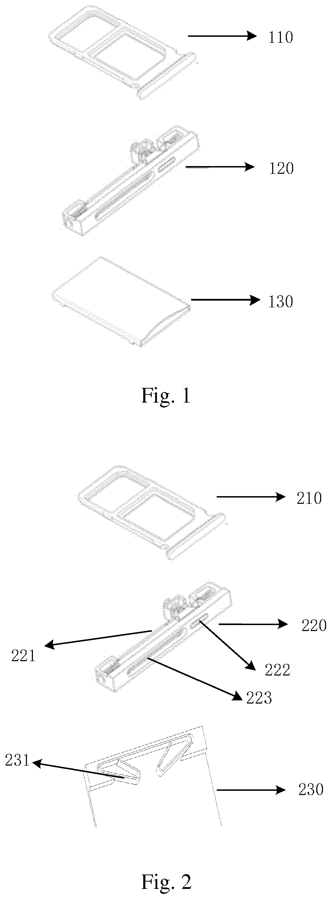

Fig. 1 is a block diagram illustrating a card holder according to an exemplary embodiment of the present disclosure. The card holder is applicable to a terminal. As illustrated in Fig. 1, the card holder includes: a card tray 110, a card lock 120 and a connector 130. The card lock 120 includes a card fastener and a control button. The connector 130 includes a leaf spring in a card seat.

When the card lock 120 controls the card fastener to be away from the card tray 110 by means of the control button, the leaf spring in the card seat recovers from a compressed state to a normal state, and the card tray 110 is ejected outward from a first opening extending along a housing of the card lock 120.

When the card tray 110 moves inward from the first opening extending along the housing of the card lock 120, the leaf spring in the card seat is compressed from the normal state to the compressed state, such that the card fastener and the card tray 110 are in a locked state.

Accordingly, with the card holder provided in the present disclosure, when the card lock controls the card fastener to be away from the card tray by means of the control button, the leaf spring in the card seat recovers from a compressed state to a normal state, and the card tray is ejected outward from a first opening extending along a housing of the card lock, such that a user may control ejection of the card tray via the control button, with no need of using an ejection pin. This solves the problem that replacement of a card is complicated due to the use of an ejection pin for replacement of the card in a terminal with an non-removable battery, and improves the card replacement efficiency.

Fig. 2 is a block diagram illustrating a card holder according to another exemplary embodiment of the present disclosure. The card holder is applicable to a terminal. As illustrated in Fig. 2, the card holder includes: a card tray 210, a card lock 220 and a connector 230. The card lock 220 includes a card fastener 221 and a control button 222. The connector 230 includes a leaf spring 231 in a card seat.

The card tray 210 is a component of the terminal for holding the card. The card lock 220 cooperates with the connector 230 to control ejection and retraction of the card tray 210. After the card tray 210 is ejected, a user may replace the card in the card tray 210; and after the card tray 210 is retracted, the terminal may normally use the card.

When the card lock 220 controls the card fastener 221 to be away from the card tray 210 by means of the control button 222, the leaf spring 231 in the card seat recovers from a compressed state to a normal state, and the card tray 210 is ejected outward from a first opening 223 extending along a housing of the card lock 220.

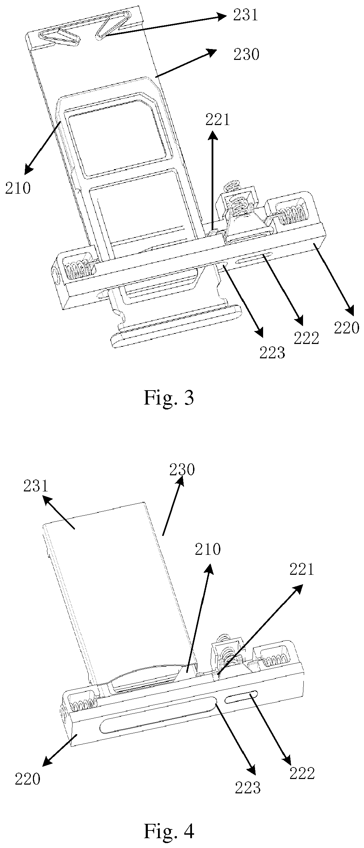

Fig. 3 is a schematic diagram illustrating ejection of a card tray. When a user presses the control button 222, the control button 222 triggers the card fastener 221 in the card lock 220 to be away from the card tray 210, such that the card tray 210 and the card fastener 221 are not in a locked state. In this case, since the card tray 210 and the leaf spring 231 in the card seat abut against one another and the leaf spring 231 in the card seat is in a compressed state, the leaf spring 231 in the card seat recovers from the compressed state to a normal state. Thereby, the card tray 210 abutting against the leaf spring 231 in the card seat is pushed out from the first opening 223. In other words, the card tray 210 is ejected from the first opening 223.

When the card tray 210 moves inward from the first opening 223 extending along the housing of card lock 220, the leaf spring 231 in the card seat is compressed from the normal state to the compressed state, such that the card fastener 221 and the card tray 210 are in a locked state.

Fig. 4 is a schematic diagram illustrating retraction of a card tray. When a user plugs the card tray 210 into the first opening 223 and pushes the card tray 210 inward, the card tray 210 abuts against the leaf spring 231 in the card seat, such that the leaf spring 231 in the card seat is compressed from a normal state to a compressed state. In this case, the card tray 210 and the card fastener 221 are in a locked state.

Structures of the connector 230, the card lock 220, and the card tray 210 are further described hereinafter.

Firstly, the connector 230 is described hereinafter.

The connector 230 is configured to eject the card tray 210 when the card tray 210 is far away from the card fastener 221. Specifically, the connector 230 may include a leaf spring in a card seat, by means of which the card tray 210 is ejected; a spring, by means of which the card tray 210 is ejected; or other elastic member, by means of which the card tray 210 is ejected. This is not limited in this embodiment.

Specifically, when the connector 230 includes a leaf spring in a card seat or a spring, the leaf spring in the card seat or the spring may be installed in a groove, or may not be installed in a groove, which is not limited in this embodiment.

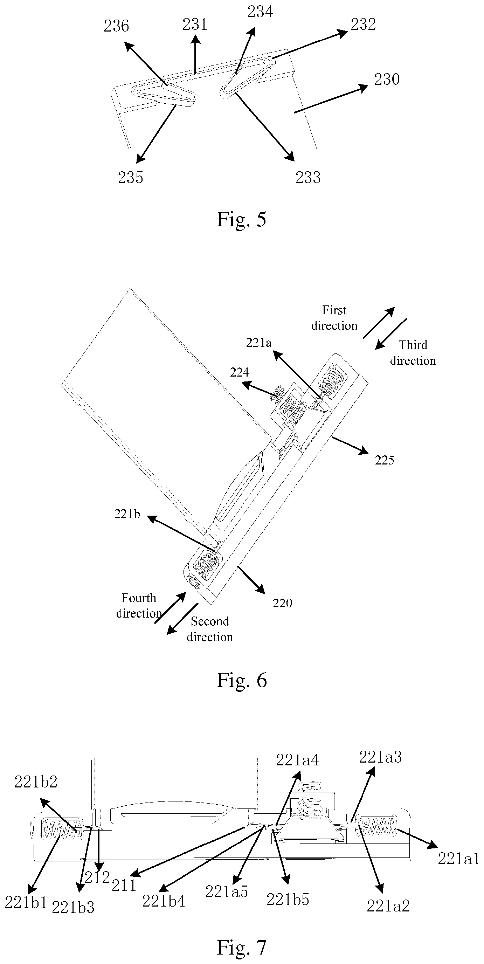

In this embodiment, for example, the connector 230 includes the leaf spring 231 in the card seat and the leaf spring 231 in the card seat installed in the groove. Referring to Fig. 5, a schematic structural diagram illustrating a connector is given. The connector 230 includes a first body. An open triangle groove 232 extending along the first body is formed in the first body. A triangle leaf spring 231 in a card seat is formed in the open triangle groove 232. A part of a first sloping side 233 of the leaf spring 231 in the card seat is bent inward to form a second sloping side 234. The first sloping side 233 forms an acute angle with the second sloping side 234. A part of a third sloping side 235 of the leaf spring 231 in the card seat is bent inward to form a fourth sloping side 236. The third sloping side 235 forms an acute angle with the fourth sloping side 236.

An upper surface, a lower surface, a left surface, and a right surface of the first body respectively extend toward a direction reverse to the compression direction of the leaf spring 231 in the card seat for a predetermined length less than or equal to a length of the card tray 210.

Specifically, the open triangle groove 232 is a triangle groove with two sloping sides not intersecting each other, for installing the leaf spring 231 in the card seat.

The leaf spring 231 in the card seat includes a first sloping side 233 and a second sloping side 234. The second sloping side 234 is formed by bending the first sloping side 233 inward. The second sloping side 234 forms an acute angle with the first sloping side 233, such that when the first sloping side 233 is pushed by the card tray 210 to move inward, the second sloping side 234 abuts against the bottom side of the triangle, causing the leaf spring 231 in the card seat to be in a compressed state. Similarly, the leaf spring 231 in the card seat includes a third sloping side 235 and a fourth sloping side 236. The third sloping side 235 forms an acute angle with the fourth sloping side 236, such that when the fourth sloping side 236 is pushed by the card tray 210 to move inward, the third sloping side 235 abuts against the bottom side of the triangle, causing the leaf spring 231 in the card seat to be in the compressed state.

In this embodiment, the upper surface, the lower surface, the left surface, and the right surface of the first body may respectively extend toward a direction reverse to the compression direction of the leaf spring 231 in the card seat for a predetermined length, to form a protection sleeve which isolates the card from other components in the terminal. The predetermined length extended is less than the length of the card tray 210, to ensure that the leaf spring 231 in the card seat is in the compressed state when the card tray 210 is retracted.

Secondly, the card lock 220 is described hereinafter.

In this embodiment, the card lock 220 further includes a first spring 224 abutting against the control button 222, a first card fastener 221a, and a second card fastener 221b.

When the control button 222 moves inward from a second opening 225 extending along the housing of the card lock 220, the first card fastener 221a moves toward a first direction away from the card tray 210, the second card fastener 221b moves toward a second direction away from the card tray 210, and the first spring 224 is compressed from the normal state to the compressed state.

Fig. 6 is a schematic structural diagram of a card holder. When the first spring 224 recovers from a compressed state to a normal state, the first card fastener 221a moves toward a third direction approaching the card tray 210, and the second card fastener 221b moves toward a fourth direction approaching the card tray 210.

Specifically, the first spring 224 abuts against the control button 222. When a user presses the control button 222, the control button 222 pushes the first spring 224 to move inward, such that the first spring 224 is compressed from the normal state to the compressed state. When the user releases the control button, the first spring 224 recovers from the compressed state to the normal state, and pushes the control button 222 to move outward.

The card fastener 221 includes the first card fastener 221a and the second card fastener 221b. Specifically, when the control button 222 moves inward, the first card fastener 221a moves toward the first direction away from the card tray 210, and the second card fastener 221b moves toward the second direction away from the card tray 210. In this case, the first card fastener 221a and the card tray 210 are not in a locked state, and the second card fastener 221b and the card tray 210 are not in a locked state either. When the first spring 224 recovers from the compressed state to the normal state, the first card fastener 221a moves toward the third direction approaching the card tray 210, and the second fastener 221b moves toward the fourth direction approaching the card tray 210. In this case, the first card fastener 221a and the card tray 210 are in a locked state, and the second card fastener 221b and the card tray 210 are in a locked state too.
1) Fig. 7 is a schematic structural diagram of a card fastener. The first card fastener 221a includes a second spring 221a1 and a first locking rod 221a3 abutting against the second spring 221a1 via a first port 221a2.

The first locking rod 221a3 includes a fourth body. A first groove 221a4 extending along the fourth body is formed in the fourth body. A side face close to the first port 221a2 in the first groove 221a4 abuts against a first side face of the control button 222. A second port 221a5 opposite to the first port 221a2 in the fourth body abuts against the second groove 211 of the card tray 210.

The first locking rod 221a3 may abut against the second spring 221a1 via the first port 221a2, or may be coupled to the second spring 221a1 via the first port 221a2, which is not limited in this embodiment.

In this embodiment, the control button 222 may be a trapezoidal button, and the side length on the outer side of the terminal is greater than the side length on the inner side of the terminal.

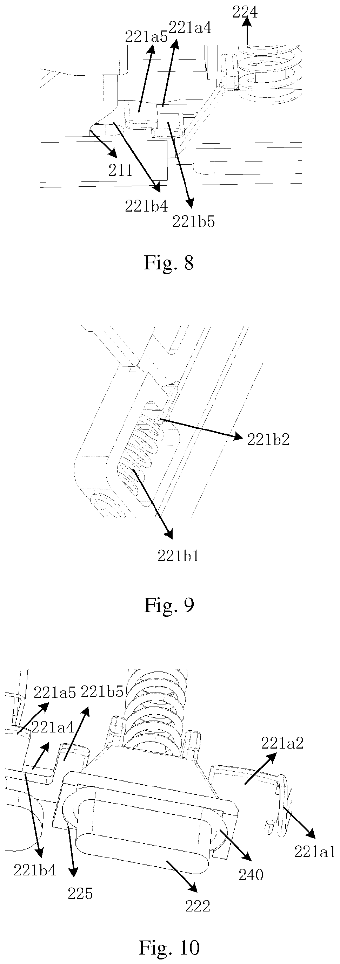

Specifically, the first locking rod 221a3 includes the first groove 221a4. A side face close to the first port 221a2 in the first groove 221a4 abuts against the first side face of the control button 222, such that when a user presses the control button 222, the control button 222 pushes the first locking rod 221a3 via the first side face abutting against the side face of the first port 221a2 to move toward the first direction, causing the second port 221a5 not to abut against the second groove 211, and thus the first locking rod 221a3 and the card tray 210 are not in a locked state. In this case, the first locking rod 221a3 compresses the second spring 221a1 from the normal state to the compressed state. Fig. 8 is a first schematic partial structural diagram illustrating a card fastener.

When the user releases the control button 222, the second spring 221a1 recovers from the compressed state to the normal state, and pushes the first locking rod 221a3 to move toward the third direction, and the second port 221a5 abuts against the second groove 211, such that the first locking rod 221a3 and the card tray 210 are in a locked state.

2) Referring to Fig. 7, the second card fastener 221b includes a third spring 221b1 and a second locking rod 221b3 abutting against the third spring 221b1 via a third port 221b2.

The second locking rod 221b3 includes a fifth body. A third groove 221b4 extending along the fifth body is formed in the fifth body. A side face close to the third port 221b2 in the third groove221b4 abuts against a fourth groove 212 of the card tray 210. A fourth port 221b5 opposite to the third port 221b2 in the fifth body abuts against a second side face of the control button 222.

The second locking rod 221b3 may abut against the third spring 221b1 via the third port 221b2, or may be coupled to the third spring 221b1 via the third port 221b2, which is not limited in this embodiment.

Specifically, the fourth port 221b5 abuts against the second side face of the control button 222, such that when a user presses the control button 222, the control button 222 pushes the second locking rod 221b3 via the second side face abutting against the fourth port 221b5 toward the second direction. Since the side face close to the third port 221b2 in the third groove 221b4 abuts against the fourth groove 212 of the card tray 210, the third port 221b2 does not abut against the fourth groove 212, and the second locking rod 221b3 and the card tray 210 are not in a locked state. In this case, the third port 221b2 of the second locking rod 221b3 compresses the third spring 221b1 from the normal state to the compressed state. Fig. 9 is a second schematic partial structural diagram illustrating a card fastener.

When the user releases the control button 222, the third spring 221b1 recovers from the compressed state to the normal state, and pushes the second locking rod 221b3 to move toward the fourth direction, and the side face close to the third port 221b2 in the third groove 221b4 abuts against the fourth groove 212, such that the second locking rod 221b3 and the card tray 210 are in a locked state.

Optionally, the card holder further includes a first sealing ring 240, wherein the first sealing ring 240 is positioned at a joint between a second body 222a and a third body 222b of the control button 222 and abuts against the housing of the card lock 220. The third body 222b is a body perpendicular to the second body 222a and formed by extension of the second body 222a. The second body 222a mates with a second opening 225 extending along the housing of the card lock 220.

Fig. 10 is a first schematic diagram illustrating a first sealing ring. As illustrated in Fig. 10, the first sealing ring 240 is configured to seal the second opening 225 and the control button 222. Although the second body 222a in the control button 222 mates with the second opening 225, impurities such as water and dust may also enter the terminal via a gap between the second body 222a and the second opening 225. Therefore, the first sealing ring 240 may be installed between the second opening 225 and the control button 222 to improve the water-proofing and dust-proofing performance of the terminal.

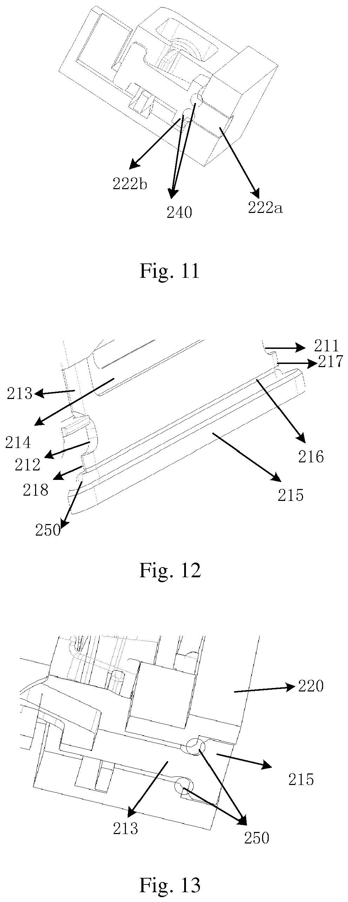

Fig. 11 is a second schematic diagram of the first sealing ring. As illustrated in Fig. 11, the first sealing ring 240 is installed at a joint between the second body 222a and the third body 222b, and abuts against the housing of the card lock 220, to block the impurities such as water and dust from entering the terminal via the second opening 225.

Thirdly, the card tray 210 is described hereinafter.

In this embodiment, the card tray 210 includes a sixth body 213. The sixth body 213 includes at least one card opening 214 extending along the sixth body 213. A seventh body 215 perpendicular to the sixth body 213 is formed by outward extension of the card opening along a third side face of the sixth body 213. The seventh body 215 mates with the first opening 223.

The second groove 211 extending along the sixth body 213 is formed on a fourth side face 217 perpendicular to the third side face 216, and the fourth groove 212 extending along the sixth body 213 is formed on a fifth side face 218 perpendicular to the third side face 216.

In this embodiment, the card opening 214 in the card tray 210 may be designed according to the shape of the card used in a terminal. For example, the card opening 214 may be arranged for a memory card or for a SIM card. Since the SIM cards may be in different shapes, different card openings 214 may be arranged according to the specific shapes of the SIM cards.

It should be noted that the card tray 210 may include at least one card opening 214, for example, a card opening 214 for accommodating a memory card and a card opening 214 for accommodating a SIM card, or two card openings 214 for accommodating the SIM cards, or the like, which is not limited in this embodiment.

The second groove 211 does not intersect with the card opening 214, and the third groove 212 does not intersect with the card opening 214.

Optionally, the card holder further includes a second sealing ring 250, wherein the second sealing ring 250 is positioned at a joint between the sixth body 213 and the seventh body 215.

Fig. 12 is a first schematic diagram illustrating a second sealing ring. As illustrated in Fig. 12, the second sealing ring 250 is configured to seal the first opening 223 and the card tray 210. Although the seventh body 215 in the card tray 210 mates with the first opening 223, impurities such as water and dust may also enter the terminal via a gap between the seventh body 215 and the first opening 223. Therefore, the second sealing ring 250 may be installed between the seventh body 215 and the first opening 223 to improve the water-proofing and dust-proofing performance of the terminal.

Fig. 13 is a second schematic diagram of the second sealing ring. As illustrated in Fig. 13, the second sealing ring 250 is installed at the joint between the sixth body 213 and the seventh body 215, to block water and dust from entering a terminal via the first opening 223.

Accordingly, with the card holder provided in the present disclosure, when the card lock controls the card fastener to be away from the card tray by means of the control button, the leaf spring in the card seat recovers from a compressed state to a normal state, and the card tray is ejected outward from a first opening extending along a housing of the card lock, such that a user may control ejection of the card tray via the control button, with no need of using an ejection pin. This solves the problem that replacement of a card is complicated due to the use of an ejection pin for replacement of the card in a terminal with an non-removable battery, and improves the card replacement efficiency.

In addition, a first sealing ring is installed at a joint between the second body and the third body, and a second sealing ring is installed at a joint between the sixth body and the seventh boxy. This prevents impurities such as water and dust from entering a terminal and thereby improves the water-proofing and dust-proofing performance of the terminal.

Other embodiments of the present disclosure will be apparent to those skilled in the art from consideration of the specification and practice disclosed herein. This application is intended to cover any variations, uses, or adaptations of the present disclosure following the general principles thereof and including such departures from the present disclosure as coming within common knowledge or customary technical means in the art. It is intended that the specification and examples be considered as exemplary only, with a true scope and spirit of the present disclosure being indicated by the appended claims.

It will be appreciated that the present disclosure is not limited to the exact construction that has been described above and illustrated in the accompanying drawings, and that various modifications and changes can be made without departing from the scope thereof. The scope of the present disclosure is only defined by the appended claims.

## Claims

1. A card holder for an electronic card, by comprising: a card tray (110, 210), a card lock (120, 220) and a card tray eject mechanism (130, 230), the card lock (120, 220) comprising a card fastener (221) and a control button (222), and the card tray eject mechanism (130, 230) comprising a leaf spring (231) in a card seat; the card holder being configured so that:
when the card lock (120, 220) controls the card fastener (221) to be away from the card tray (110, 210) by means of the control button (222), the leaf spring (231) in the card seat recovers from a compressed state to a normal state, and the card tray (110, 210) is ejected outward from a first opening extending along a housing of the card lock (120, 220);
when the card tray (110, 210) moves inward from the first opening extending along the housing of the card lock (120, 220), the leaf spring (231) in the card seat is compressed from the normal state to the compressed state, such that the card fastener (221) and the card tray (110, 210) are in a locked state; the card holder being **characterised in that**
the card tray eject mechanism (130, 230) comprises a first body, an open triangle groove extending along the first body being formed in the first body, a triangle leaf spring (231) in a card seat being formed in the open triangle groove, a part of a first sloping side of the leaf spring (231) in the card seat being bent inward to form a second sloping side, the first sloping side forming an acute angle with the second sloping side, a part of a third sloping side of the leaf spring (231) in the card seat being bent inward to form a fourth sloping side, and the third sloping side forming an acute angle with the fourth sloping side;
wherein an upper surface, a lower surface, a left surface, and a right surface of the first body respectively extend toward a direction reverse to the compression direction of the leaf spring (231) in the card seat for a predetermined length, the predetermined length being less than or equal to a length of the card tray (110, 210).

2. The card holder according to claim 1, wherein the card holder further comprises a first sealing ring (240), the first sealing ring (240) being positioned at a joint between a second body and a third body of the control button (222) and abutting against the housing of the card lock (120, 220), the third body being a body being perpendicular to the second body and formed by extension of the second body, the second body mating with a second opening extending along the housing of the card lock (120, 220).

3. The card holder according to claim 1 or 2, wherein the card lock (120, 220) further comprises a first spring (224) abutting against the control button (222), a first card fastener (221a), and a second card fastener (221b);
when the control button (222) moves inward from a second opening extending along the housing of the card lock (120, 220), the first card fastener (221a) moves toward a first direction away from the card tray (110, 210), the second card fastener (221b) moves toward a second direction away from the card tray (110, 210), and the first spring (224) is compressed from the normal state to the compressed state; and
when the first spring (224) recovers from the compressed state to the normal state, the first card fastener (221a) moves toward a third direction approaching the card tray (110, 210), and the second card fastener (221b) moves toward a fourth direction approaching the card tray (110, 210).

4. The card holder according to claim 3, wherein the first card fastener (221a) comprises a second spring (221a1) and a first locking rod (221a3) abutting against the second spring (221a1) via a first port; and
the first locking rod (221a3) comprises a fourth body, a first groove extending along the fourth body being formed in the fourth body, a side face close to the first port in the first groove abutting against a first side face of the control button (222), a second port opposite to the first port in the fourth body abutting against a second groove of the card tray (110, 210).

5. The card holder according to claim 3 or 4, wherein the second card fastener (221b) comprises a third spring (221bl) and a second locking rod (221b3) abutting against the third spring (221b1) via a third port; and
the second locking rod (221b3) comprises a fifth body, a third groove extending along the fifth body being formed in the fifth body, a side face close to the third port in the third groove abutting against a fourth groove of the card tray (110, 210), a fourth port opposite to the third port in the fifth body abutting against a second side face of the control button (222).

6. The card holder according to claim 4 or 5, wherein the card tray (110, 210) comprises a sixth body, the sixth body comprising at least one card opening extending along the sixth body, a seventh body perpendicular to the sixth body being formed by outward extension of the card opening along a third side face of the sixth body, the seventh body mating with the first opening; and
the second groove extending along the sixth body is formed on a fourth side face perpendicular to the third side face, and the fourth groove extending along the sixth body is formed on a fifth side face perpendicular to the third side face.

7. The card holder according to claim 6, wherein the card holder further comprises a second sealing ring (250), the second sealing ring (250) being positioned at a joint between the sixth body and the seventh body.

## Patentansprüche

1. Kartenhalter für eine elektronische Karte, der Folgendes umfasst: eine Kartenauflage (110, 210), eine Kartensperre (120, 220) und einen Kartenauflage-Auswurfmechanismus (130, 230), wobei die Kartensperre (120, 220) ein Kartenbefestigungsmittel (221) und eine Steuertaste (222) umfasst und der Kartenauflage-Auswurfmechanismus (130, 230) eine Blattfeder (231) in einem Kartensitz umfasst;
wobei der Kartenhalter so konfiguriert ist, dass:
wenn die Kartensperre (120, 220) das Kartenbefestigungsmittel (221) anhand der Steuertaste (222) so steuert, dass es von der Kartenauflage (110, 210) weg ist, die Blattfeder (231) in dem Kartensitz sich von einem komprimierten Zustand in einen Normalzustand zurückstellt und die Kartenauflage (110, 210) von einer entlang einem Gehäuse der Kartensperre (120, 220) verlaufenden ersten Öffnung auswärts ausgeworfen wird;
wenn die Kartenauflage (110, 210) sich von der entlang dem Gehäuse des Kartensperre (120, 220) verlaufenden ersten Öffnung einwärts bewegt, die Blattfeder (231) im Kartensitz vom Normalzustand in den komprimierten Zustand komprimiert wird, so dass das Kartenbefestigungsmittel (221) und die Kartenauflage (110, 210) in einem gesperrten Zustand sind; wobei der Kartenhalter **dadurch gekennzeichnet ist, dass**
der Kartenauflage-Auswurfmechanismus (130, 230) Folgendes umfasst: einen ersten Körper, eine im ersten Körper ausgebildete, entlang dem ersten Körper verlaufende, offene dreieckige Rille, eine dreieckige Blattfeder (231) in einem in der offenen dreieckigen Rille ausgebildeten Kartensitz, wobei ein Teil einer ersten geneigten Seite der Blattfeder (231) im Kartensitz einwärts gebogen ist, um eine zweite geneigte Seite zu bilden, wobei die erste geneigte Seite einen spitzen Winkel zur zweiten geneigten Seite bildet, wobei ein Teil einer dritten geneigten Seite der Blattfeder (231) in dem Kartensitz einwärts geneigt ist, um eine vierte geneigte Seite zu bilden, und wobei die dritte geneigte Seite einen spitzen Winkel mit der vierten geneigten Seite bildet;
wobei eine obere Fläche, eine untere Fläche, eine linke Fläche und eine rechte Fläche des ersten Körpers jeweils in einer Richtung umgekehrt zur Kompressionsrichtung der Blattfeder (231) im Kartensitz über eine bestimmte Länge verlaufen, wobei die vorbestimmte Länge gleich oder kleiner ist als eine Länge der Kartenauflage (110, 210).

2. Kartenhalter nach Anspruch 1, wobei der Kartenhalter ferner einen ersten Dichtungsring (240) umfasst, wobei der erste Dichtungsring (240) an einer Verbindungsstelle zwischen einem zweiten Körper und einem dritten Körper der Steuertaste (222) positioniert ist und am Gehäuse der Kartensperre (120, 220) anliegt, wobei der dritte Körper ein Körper lotrecht zum zweiten Körper ist, gebildet durch eine Verlängerung des zweiten Körpers, wobei der zweite Körper in eine entlang dem Gehäuse der Kartensperre (120, 220) verlaufende zweite Öffnung gesteckt wird.

3. Kartenhalter nach Anspruch 1 oder 2, wobei die Kartensperre (120, 220) ferner eine erste Feder (224), die an der Steuertaste (222) anliegt, ein erstes Kartenbefestigungsmittel (221a) und ein zweites Kartenbefestigungsmittel (221b) umfasst;
wobei sich die Steuertaste (222) von der entlang dem Gehäuse der Kartensperre (120, 220) verlaufenden zweiten Öffnung einwärts bewegt, das erste Kartenbefestigungsmittel (221a) sich in einer ersten Richtung von der Kartenauflage (110, 210) weg bewegt, das zweite Kartenbefestigungsmittel (221b) sich in einer zweiten Richtung von der Kartenauflage (110, 210) weg bewegt und die erste Feder (224) vom Normalzustand in den komprimierten Zustand komprimiert wird; und
wenn sich die erste Feder (224) vom komprimierten Zustand in den Normalzustand zurückstellt, das erste Kartenbefestigungsmittel (221a) sich in einer dritten Richtung bewegt, in der es sich der Kartenauflage (110, 210) nähert, und das zweite Kartenbefestigungsmittel (221b) sich in einer vierten Richtung bewegt, in der es sich der Kartenauflage (110, 210) nähert.

4. Kartenhalter nach Anspruch 3, wobei das erste Kartenbefestigungsmittel (221a) eine zweite Feder (221a1) und einen ersten Sperrstab (221a3) aufweist, der an der zweite Feder (221a1) über einen ersten Port anliegt; und
der erste Sperrstab (221a3) einen vierten Körper umfasst, wobei in dem vierten Körper eine entlang dem vierten Körper verlaufende erste Rille ausgebildet ist, wobei eine Seitenfläche nahe dem ersten Port in der ersten Rille an einer ersten Seitenfläche der Steuertaste (222) anliegt, wobei ein zweiter Port gegenüber dem ersten Port im vierten Körper an einer zweiten Rille der Kartenauflage (110, 210) anliegt.

5. Kartenhalter nach Anspruch 3 oder 4, wobei das zweite Kartenbefestigungsmittel (221b) eine dritte Feder (221b1) und einen zweiten Sperrstab (221b3) umfasst, der über einen dritten Port an der dritten Feder (221b1) anliegt; und
der zweite Sperrstab (221b3) einen fünften Körper umfasst, wobei in dem fünften Körper eine entlang dem fünften Körper verlaufende dritte Rille ausgebildet ist, wobei eine Seitenfläche nahe dem dritten Port in der dritten Rille an einer vierten Rille der Kartenauflage (110, 210) anliegt, wobei ein vierter Port gegenüber dem dritten Port im fünften Körper an einer zweiten Seitenfläche der Steuertaste (222) anliegt.

6. Kartenhalter nach Anspruch 4 oder 5, wobei die Kartenauflage (110, 210) einen sechsten Körper umfasst, wobei der sechste Körper wenigstens eine entlang dem sechsten Körper verlaufende Kartenöffnung umfasst, wobei ein siebter Körper lotrecht zum sechsten Körper durch eine auswärtige Erweiterung der Kartenöffnung entlang einer dritten Seitenfläche des sechsten Körpers ausgebildet ist, wobei der siebte Körper in die erste Öffnung gesteckt wird; und
wobei die entlang dem sechsten Körper verlaufende zweite Rille auf einer vierten Seitenfläche lotrecht zur dritten Seitenfläche ausgebildet ist und die entlang dem sechsten Körper verlaufende vierte Rille auf einer fünften Seitenfläche lotrecht zur dritten Seitenfläche ausgebildet ist.

7. Kartenhalter nach Anspruch 6, wobei der Kartenhalter ferner einen zweiten Dichtungsring (250) umfasst, wobei der zweite Dichtungsring (250) an einer Verbindungsstelle zwischen dem sechsten Körper und dem siebten Körper positioniert ist.

## Revendications

1. Support de carte pour carte électronique, comprenant : un plateau à carte (110, 210), un verrou de carte (120, 220) et un mécanisme d'éjection de plateau à carte (130, 230), le verrou de carte (120, 220) comprenant une fixation de carte (221) et une touche de commande (222), et le mécanisme d'éjection de plateau à carte (130, 230) comprenant un ressort à lame (231) dans une assise pour carte ;
le support de carte étant configuré de telle sorte que :
quand le verrou de carte (120, 220) commande la fixation de carte (221) afin de l'écarter du plateau à carte (110, 210) au moyen de la touche de commande (222), le ressort à lame (231) dans l'assise pour carte revient d'un état compressé à un état normal, et le plateau à carte (110, 210) est éjecté vers l'extérieur depuis une première ouverture s'étendant le long d'un logement du verrou de carte (120, 220) ;
quand le plateau à carte (110, 210) se déplace vers l'intérieur depuis la première ouverture s'étendant le long du logement du verrou de carte (120, 220), le ressort à lame (231) dans l'assise pour carte est compressé de l'état normal à l'état compressé, de telle sorte que la fixation de carte (221) et le plateau à carte (110, 210) soient dans un état verrouillé ; le support de carte étant **caractérisé en ce que**
le mécanisme d'éjection de plateau à carte (130, 230) comprend un premier corps, une rainure triangulaire ouverte s'étendant le long du premier corps étant formée dans le premier corps, un ressort à lame triangulaire (231) dans une assise pour carte étant formé dans la rainure triangulaire ouverte, une partie d'un premier côté incliné du ressort à lame (231) dans l'assise pour carte étant courbée vers l'intérieur pour former un deuxième côté incliné, le premier côté incliné formant un angle aigu avec le deuxième côté incliné, une partie d'un troisième côté incliné du ressort à lame (231) dans l'assise pour carte étant courbée vers l'intérieur pour former un quatrième côté incliné, et le troisième côté incliné formant un angle aigu avec le quatrième côté incliné ;
dans lequel une surface supérieure, une surface inférieure, une surface gauche, et une surface droite du premier corps respectivement s'étendent vers un sens inverse au sens de compression du ressort à lame (231) dans l'assise pour carte sur une longueur prédéterminée, la longueur prédéterminée étant inférieure ou égale à une longueur du plateau à carte (110, 210).

2. Support de carte selon la revendication 1, le support de carte comprenant en outre un premier anneau d'étanchéité (240), le premier anneau d'étanchéité (240) étant positionné au niveau d'une articulation entre un deuxième corps et un troisième corps de la touche de commande (222) et butant contre le logement du verrou de carte (120, 220), le troisième corps étant un corps perpendiculaire au deuxième corps et étant formé par extension du deuxième corps, le deuxième corps s'accouplant avec une deuxième ouverture s'étendant le long du logement du verrou de carte (120, 220).

3. Support de carte selon la revendication 1 ou 2, dans lequel le verrou de carte (120, 220) comprend en outre un premier ressort (224) butant contre la touche de commande (222), une première fixation de carte (221a), et une seconde fixation de carte (221b) ;
quand la touche de commande (222) se déplace vers l'intérieur depuis une seconde ouverture s'étendant le long du logement du verrou de carte (120, 220), la première fixation de carte (221a) se déplace vers un premier sens l'écartant du plateau à carte (110, 210), la deuxième fixation de carte (221b) se déplace vers un second sens l'écartant du plateau à carte (110, 210), et le premier ressort (224) est compressé de l'état normal à l'état compressé ; et
quand le premier ressort (224) revient de l'état compressé à l'état normal, la première fixation de carte (221a) se déplace vers un troisième sens la rapprochant du plateau à carte (110, 210), et la seconde fixation de carte (221b) se déplace vers un quatrième sens la rapprochant du plateau à carte (110, 210).

4. Support de carte selon la revendication 3, dans lequel la première fixation de carte (221a) comprend un deuxième ressort (221a1) et une première tige de verrouillage (221a3) butant contre le deuxième ressort (221a1) par l'intermédiaire d'un premier orifice ; et
la première tige de verrouillage (221a3) comprend un quatrième corps, une première rainure s'étendant le long du quatrième corps étant formée dans le quatrième corps, une face latérale proche du premier orifice dans la première rainure butant contre une première face latérale de la touche de commande (222), un deuxième orifice opposé au premier orifice dans le quatrième corps butant contre une seconde rainure du plateau à carte (110, 210).

5. Support de carte selon la revendication 3 ou 4, dans lequel la seconde fixation de carte (221b) comprend un troisième ressort (221b1) et une seconde tige de verrouillage (221b3) butant contre le troisième ressort (221b1) par l'intermédiaire d'un troisième orifice ; et
la seconde tige de verrouillage (221b3) comprend un cinquième corps, une troisième rainure s'étendant le long du cinquième corps étant formée dans le cinquième corps, une face latérale proche du troisième orifice dans la troisième rainure butant contre une quatrième rainure du plateau à carte (110, 210), un quatrième orifice opposé au troisième orifice dans le cinquième corps butant contre une deuxième face latérale de la touche de commande (222).

6. Support de carte selon la revendication 4 ou 5, dans lequel le plateau à carte (110, 210) comprend un sixième corps, le sixième corps comprenant au moins une ouverture de carte s'étendant le long du sixième corps, un septième corps perpendiculaire au sixième corps étant formé par extension vers l'extérieur de l'ouverture de carte le long d'une troisième face latérale du sixième corps, le septième corps s'accouplant avec la première ouverture ; et
la seconde rainure s'étendant le long du sixième corps est formée sur une quatrième face latérale perpendiculaire à la troisième face latérale, et la quatrième rainure s'étendant le long du sixième corps est formée sur une cinquième face latérale perpendiculaire à la troisième face latérale.

7. Support de carte selon la revendication 6, le support de carte comprenant en outre un second anneau d'étanchéité (250), le second anneau d'étanchéité (250) étant positionné au niveau d'une articulation entre le sixième corps et le septième corps.
